# EUROPÄISCHE PATENTSCHRIFT

(11) **EP 3 953 244 B1**
(45) Veröffentlichungstag und Bekanntmachung des Hinweises auf die Patenterteilung: **22.01.2025**
(21) Anmeldenummer: 20719975.3
(22) Anmeldetag: 14.04.2020
(51) Int. Cl.: B62K 23/04, B60L 7/18, B62J 45/413

(54) **FAHRZEUG**
VEHICLE
VÉHICULE

(30) Priorität: 18.04.2019 DE 102019110352; 01.08.2019 DE 102019120866
(43) Veröffentlichungstag der Anmeldung: 16.02.2022
(73) Patentinhaber: UJET S.A., 3364 Leudelange (LU)
(72) Erfinder: DAVID, Patrick, 89135 Blaustein (DE)
(74) Vertreter: Herrmann, Uwe
(86) Internationale Anmeldenummer: PCT/EP2020/060431
(87) Internationale Veröffentlichungsnummer: WO 2020/212329

(56) Entgegenhaltungen:
- EP-A1- 2 154 057
- EP-B1- 2 154 057
- WO-A1-2013/106479
- CN-U- 202 696 256
- DE-A1- 102017 122 848
- JP-A- 2017 065 282

## Beschreibung

Die vorliegende Erfindung betrifft einen Elektroroller, mit einer Antriebseinheit, umfassend einen Elektromotor zum Antrieb des Elektrorollers und einen aufladbaren Akku, der mit dem Elektromotor derart in Verbindung steht, dass der Elektromotor von dem Akku gespeist wird, und mit einer Griffanordnung mit einem nutzerseitig zu betätigenden drehbaren Griff sowie mit einer Steuerung, die mit der Griffanordnung sowie mit der Antriebseinheit in Datenverbindung steht und die ausgebildet ist, von der Griffanordnung übermittelte Daten an die Antriebseinheit zu leiten, um die Leistung des Elektromotors in Abhängigkeit von der Drehposition des Griffes zu steuern, wobei der Griff eine Ausgangsstellung aufweist und einen ersten Drehwinkelbereich, in dem sich der Elektroroller in einem Antriebsmodus befindet und ein den Elektromotor antreibendes Signal ausgegeben wird, wobei der erste Drehwinkelbereich durch Drehen des Griffes ausgehend von der Ausgangsstellung in eine erste Drehrichtung erreicht wird.

Die Griffanordnung ist an dem Lenker des Rollers angeordnet, durch eine Drehbewegung des Griffes wird der Elektromotor durch den Akku mit Strom versorgt, wobei eine Steuerung vorgesehen ist, die die Drehposition des Griffes auswertet und in Abhängigkeit davon die Motorleistung des Elektromotors steuert.

Der Bremsvorgang derartiger bekannter Elektroroller erfolgt üblicherweise mittels Trommel- oder Scheibenbremsen.

Die Reichweite derartiger Elektroroller ist in der Praxis von erheblicher Bedeutung und ein wesentliches Verkaufsargument, da Nutzer sich darauf verlassen möchten, ihr Ziel mit einer Akkuladung zuverlässig zu erreichen und nicht auf etwaige unterwegs befindliche Ladestationen angewiesen zu sein. Ist eine solche Ladung unterwegs notwendig, besteht für den Nutzer nicht nur der Nachteil, dass er ggf. nicht weiß, wo sich eine noch erreichbare Ladestation befindet, ob diese frei und funktionsfähig ist und schließlich, dass der Ladevorgang zeitintensiv ist.

Der vorliegenden Erfindung liegt daher die Aufgabe zugrunde, einen Elektroroller der eingangs genannten Art dahingehend weiterzubilden, dass dessen Reichweite auf vergleichsweise einfache Art und Weise verbessert werden kann.

Diese Aufgabe wird durch einen Elektroroller mit den Merkmalen des Anspruchs 1 gelöst.

Danach ist vorgesehen, dass der Griff einen zweiten Drehwinkelbereich aufweist, der durch Drehen des Griffes ausgehend von der Ausgangsstellung in eine zweite, zu der ersten Drehrichtung entgegengesetzte Drehrichtung erreicht wird, wobei der Griff ausgebildet ist, in dem zweiten Drehwinkelbereich ein Signal auszugeben, das den Elektroroller in einen Rekuperations-Modus schaltet.

Dreht der Nutzer den Griff somit in eine erste Richtung, befindet sich der Elektroroller im Antriebsmodus, d.h. der Elektroroller fährt, wobei vorzugsweise vorgesehen ist, dass die Steuerung derart ausgebildet ist, dass die Fahrgeschwindigkeit bzw. die Motorleistung mit zunehmender Drehung des Griffes zunimmt, wie dies beispielsweise auch von herkömmlichen Rollern oder Motorrädern mit Verbrennungsmotor bekannt ist.

Dreht der Nutzer den Griff ausgehend von einer Ausgangsstellung in die andere Richtung, schaltet die Steuerung das Fahrzeug in den Rekuperations-Modus, was bedeutet, dass die Bewegungsenergie des Fahrzeuges zumindest teilweise in elektrische Energie umgewandelt und dabei der Akku geladen wird. Dabei ergibt sich gleichzeitig der Vorteil einer Bremswirkung, wie dies von Rekuperations-Bremsen bekannt ist.

Vorzugsweise ist diese Bremswirkung so ausgeprägt, dass sie für den normalen Betrieb des Elektrorollers ausreichend ist, so dass eine oder mehrere weitere Bremsen, die auf die Räder einwirken, nur benötigt werden, wenn ein besonders scharfer Bremsvorgang erforderlich ist. Durch den Rekuperations-Modus wird somit nicht nur der Akku geladen, sondern es erfolgt auch eine Verzögerung, die die Bremsen des Elektrorollers entsprechend schont.

Vorzugsweise handelt es sich bei der Ausgangsstellung des Griffes um die Position, die der Griff einnimmt, wenn er nicht berührt wird.

Bevorzugt ist es, wenn ein Rückstellelement vorhanden ist, das auf den Griff stets eine in die Ausgangsposition wirkende Kraft ausübt, d.h. eine Rückstellkraft, die bewirkt, dass der Griff, sobald er losgelassen wird, mittels des Rückstellelementes in seine Ausgangsposition gedreht wird. Bei dem Rückstellelement handelt es vorzugsweise um eine oder um mehrere Federn, die auf den Griff einwirken.

Ein besonderer Vorteil der Erfindung besteht darin, dass der Rekuperations-Modus besonders leicht einstellbar ist. Der Nutzer muss seine Hand nicht vom Lenker bzw. vom Griff nehmen, ausreichend ist eine Drehbewegung des Griffes.

Denkbar ist es, dass das Ausmaß der Rekuperation davon abhängt, wie weit der Nutzer den Griff in den zweiten Drehwinkelbereich dreht. So ist es möglich, dass das Ausmaß der Rekuperation mit dem Drehwinkel in dem zweiten Drehwinkelbereich zunimmt.

Denkbar ist auch eine Ein/Aus-Schaltung, d.h. ein Rekuperations-Modus, der aktiviert wird, wenn sich der Griff in dem zweiten Drehwinkelbereich befindet, wobei das Ausmaß der Rekuperation in diesem Fall nicht von der Drehposition in dem zweiten Drehwinkelbereich abhängt.

Vorzugsweise ist vorgesehen, dass sich der erste und/oder der zweite Drehwinkelbereich unmittelbar an die Ausgangsstellung anschließen.

Denkbar ist es, dass aus Sicht eines neben dem Elektroroller befindlichen Beobachters ausgehend von der Ausgangsstellung der erste Drehwinkelbereich durch Drehen des Griffes gegen den Uhrzeigersinn und der zweite Drehwinkelbereich, d.h. der Rekuperations-Modus durch Drehen des Griffes im Uhrzeigersinn erreicht wird.

Vorteilhaft wird in der Ausgangsstellung weder ein den Elektromotor antreibendes Signal abgegeben noch ein den Elektroroller in den Rekuperations-Modus schaltendes Signal ausgegeben. Die Ausgangsstellung ist somit ein "Ruhemodus", in dem der Elektromotor keine Leistung entfaltet und der Akku auch nicht mittels Rekuperation aufgeladen wird.

Der Elektroroller weist einen Lenker auf, wobei die Griffanordnung vorzugsweise an einer Seite des Lenkers angeordnet ist. Der zweite, auf der anderen Seite des Lenkers befindliche Griff ist vorzugsweise feststehend, d.h. nicht drehbar.

Der Begriff "Lenker" ist weit zu verstehen und umfasst beliebige Lenkeinrichtungen. Vorzugsweise ist eine Griffhalterung vorgesehen, in der der Griff drehbar angeordnet ist. Die Griffhalterung ist so ausgebildet, dass sie sich nicht mit dem Griff dreht und somit eine Lagerung für den Griff bildet.

Es ist erfindungsgemäss, wenn ein oder mehrere Positionselemente und ein oder mehrere Sensoren vorhanden sind, die ausgebildet sind, in Abhängigkeit von der Position des oder der Positionselemente zu dem oder den Sensoren ein oder mehrere Signale auszugeben, wobei die Griffanordnung ausgebildet ist, dass durch eine Drehung des Griffes die Position des oder der Sensoren relativ zu dem oder den Positionselementen verändert wird.

Unter dem Begriff "Positionselement" ist jedes beliebige Element, wie z.B. ein Magnet etc. zu verstehen, dessen Anwesenheit bzw. Position durch einen Sensor, wie z.B. durch einen Hall-Sensor erfasst werden kann.

Es ist erfindungsgemäss, wenn sich das oder die Positionselemente an dem Griff befinden, d.h. mit dem Griff eine Drehbewegung erfahren, und der oder die Sensoren an einem nicht mit dem Griff drehbarem Element befinden, wie beispielsweise an der o.g. Griffhalterung. Auch die umgekehrte Anordnung ist denkbar, wonach sich der oder die Positionselemente an einem nicht mit dem Griff drehbaren Element und der oder die Sensoren an dem Griff befinden, d.h. mit diesem gedreht werden.

Erfindungsgemäss ist eines der Positionselemente teilkreisförmig ausgebildet ist. Dieses Positionselement kann mit einem Sensor zusammenwirken, der ausgebildet ist, aus der Lage des Positionselementes relativ zu dem Sensor ein Signal abzuleiten, wobei vorzugsweise vorgesehen ist, dass die Signalstärke durch eine Änderung dieser Lage verändert werden kann. Denkbar ist es, dass die Signalstärke umso größer oder kleiner wird, je weiter das Positionselement an dem Sensor vorbei bewegt wurde. Möglich ist es, dass der Sensor ein von dieser Relativposition abhängiges Signal, vorzugsweise Analogsignal ausgibt, dass über eine Steuerung an die Antriebseinheit übermittelt wird.

Auf diese Weise ist es möglich, eine umso größere Motorleistung bereitzustellen, je weiter der Griff in den ersten Drehwinkelbereich bewegt wird.

Wie ausgeführt, besteht erfindunsgemässe Ausgestaltung der Erfindung darin, dass wenigstens einer der Sensoren als Hall-Sensor und wenigstens eines der Positionselemente als Magnet ausgebildet ist.

Die Erfindung ist jedoch nicht darauf beschränkt, sondern umfasst beliebige Elemente, mittels derer die Drehposition des Griffes ermittelbar ist bzw. mittels derer von der Drehposition des Griffes abhängige Signale generiert werden, wie z.B. ein Potentiometer etc.

Wie ausgeführt, wirkt das teilkreisförmige Positionselement vorzugsweise mit zumindest einem Sensor derart zusammen, dass der Sensor ein Signal, vorzugsweise ein Analogsignal oder Digitalsignal ausgibt, das von der Drehposition des Positionselementes relativ zu dem Sensor abhängt.

Denkbar ist es, dass ein erster Sensor und ein zweiter Sensor sowie ein zweites Positionselement und ein drittes Positionselement vorgesehen sind und dass die Sensoren und die Positionselemente so angeordnet sind, dass in der Ausgangsposition des Griffes das dritte Positionselement den zweiten Sensor und das zweite Positionselement den ersten Sensor betätigt. Die Steuerung erkennt somit die Ausgangsposition des Griffes durch diese Sensorbetätigung bzw. durch die dadurch abgegebenen Sensorsignale.

Erfindungsgemäss sind die Sensoren und die Positionselemente so angeordnet dass in dem Antriebsmodus das dritte Positionselement den zweiten Sensor und kein Positionselement den ersten Sensor betätigt. Ist dies der Fall, erkennt die Steuerung, dass der Nutzer fahren möchte und aktiviert den Fahrmodus, indem der Elektromotor des Fahrzeuges aus dem Akku mit Strom versorgt wird.

Es kann weiterhin ein erstes Positionselement vorgesehen sein, wobei die Sensoren und die Positionselemente so angeordnet sind, dass in einem Boost-Modus das erste Positionselement den ersten Sensor und das dritte Positionselement den zweiten Sensor betätigt. Der Boost-Modus ist durch eine besonders hohe Motorleistung gekennzeichnet. Er wird nutzerseitig vorzugsweise dadurch erhalten, dass der Nutzer den Griff weit in den ersten Drehwinkelbereich dreht, d.h. der Boost-Modus stellt vorzugsweise den von der Ausgangsstellung am weitesten entfernten Bereich des ersten Drehwinkelbereichs dar.

Die Positionselemente und die Sensoren können derart angeordnet sein, dass in dem Rekuperations-Modus das dritte Positionselement den zweiten Sensor und kein Positionselement den ersten Sensor betätigt.

In einer denkbaren Ausgestaltung ist vorgesehen, dass der erste Drehwinkelbereich größer ist als der zweite Drehwinkelbereich, wobei vorzugsweise vorgesehen ist, dass der erste Drehwinkelbereich in der Spanne von 0° bis 75°, vorzugsweise in der Spanne von 0° bis 60° und besonders bevorzugt in der Spanne von 0° bis 55° liegt und/oder dass der zweite Drehwinkelbereich in der Spanne 0° bis -35°, vorzugsweise 0° bis -30° und besonders bevorzugt in der Spanne von 0° bis -27° liegt. Der Winkel 0° kennzeichnet die Ausgangsstellung des Griffes, die negativen Vorzeichen kennzeichnen, dass der zweite Drehwinkelbereich durch eine Drehung erreicht wird, die zu einer Drehung in den ersten Drehwinkelbereich entgegengesetzt ist.

In einer bevorzugten Ausgestaltung der Erfindung ist vorgesehen, dass der Elektroroller außer dem oder den Elektromotoren keinen weiteren Antriebsmotor, insbesondere keinen Verbrennungsmotor aufweist, dass es sich somit um ein reines Elektrofahrzeug handelt.

Von der Erfindung sind auch Hybridfahrzeuge umfasst, d.h. solche, die zum Antrieb sowohl über einen Elektromotor, als auch über einen Verbrennungsmotor verfügen.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weitere Einzelheiten und Vorteile der Erfindung werden anhand eines in der Zeichnung dargestellten Ausführungsbeispiels näher erläutert. Es zeigen:
- Figur 1:: eine schematische Ansicht eines Teils des Lenkers mit Griff sowie der je nach Griffdrehung einstellbaren Betriebsmodi,
- Figur 2:: eine Explosionsdarstellung der Griffanordnung mit Griff mit Griffhalterung und Magneten sowie Sensoren,
- Figur 3:: eine perspektivische Ansicht der Griffanordnung mit Griff in der Ausgangsstellung,
- Figur 4:: eine schematische Seitenansicht der Griffanordnung in der Ausgangsstellung,
- Figur 5:: eine schematische Seitenansicht der Griffanordnung in Antriebsstellung, und
- Figur 6:: eine schematische Seitenansicht der Griffanordnung in Rekuperations-Stellung.

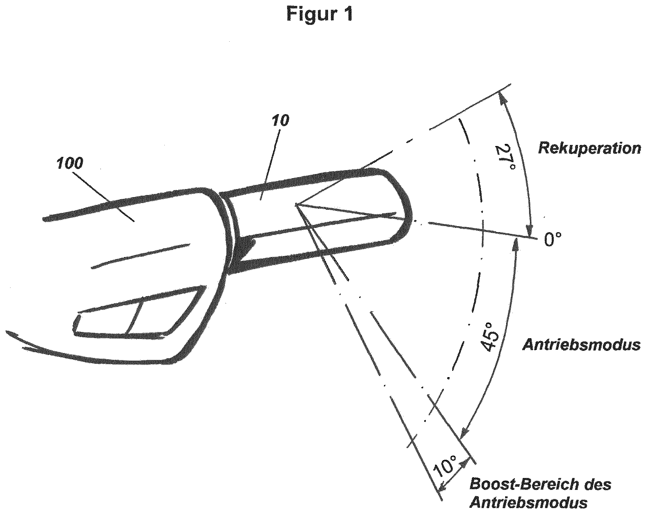

Figur 1 zeigt in schematischer Ansicht den rechten Teil des Lenkers 100 eines Elektrorollers mit einem daran angeordneten Griff 10.

Mit 0° ist die Ausgangsstellung des Griffs 10 gekennzeichnet, den dieser einnimmt, wenn der Elektroroller nicht betrieben wird. Ausgehend von dieser Nullstellung kann der Nutzer durch Drehung in eine erste Drehrichtung den Antriebsmodus wählen, der sich in diesem Ausführungsbeispiel über einen Bereich von 55° erstreckt, wobei der Winkelbereich von 45° ab der Ausgangsstellung den herkömmlichen Antriebsmodus kennzeichnet und der sich daran anschließende Winkelbereich von 10° den Boost-Modus kennzeichnet.

Dreht der Nutzer den Griff in die andere, entgegengesetzte Richtung, wird der Rekuperations-Modus eingestellt, der sich in dem hier gezeigten Ausführungsbeispiel über einen zweiten Drehwinkelbereich des Griffes von 27° erstreckt und dessen Betätigung nur während der Fahrt Sinn macht, da nur dann eine Rekuperation und eine Bremswirkung entfaltet werden kann.

Sämtliche Winkelangaben sind nur exemplarischer Natur und nicht beschränkend.

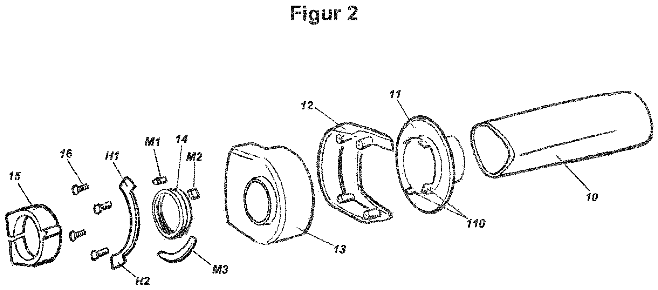

Figur 2 zeigt eine Explosionsansicht der Griffanordnung mit dem drehbaren Griff 10, dem Griffendstück 11, das drehfest mit dem Griff 10 in Verbindung steht und das Nuten 110 zur Aufnahme der Magnete M1, M2 und M3 aufweist. Diese Magnete sind im Umgangsrichtung des Griffendstückes 11 voneinander beabstandet und werden somit ebenfalls gedreht und in Ihrer Position relativ zu den nicht mit dem Griff 10 bewegten Teilen verändert, wenn der Griff 10 gedreht wird.

Die Bezugszeichen 12, 13 kennzeichnen eine nicht mit dem Griff 10 drehbare, sondern feststehende Griffhalterung, in der der Griff 10 bzw. das Griffendstück 11 drehbar angeordnet ist. Die beiden Teile 12 und 13 der Griffhalterung sind mittels Schrauben 16 miteinander verbunden.

An dem Teil 13 der Griffhalterung befinden sich in Umfangsrichtung voneinander beabstandet an einer teilkreisförmigen Tragleiste die Hall-Sensoren H1 und H2.

Das Bezugszeichen 14 kennzeichnet eine Feder, die mittels der Klammer 15 fixiert wird und die mit dem Griff 10 oder mit dessen Endstück 11 so zusammenwirkt, dass der Griff 10 und mit diesem das Griffendstück stets in die Ausgangsstellung zurückgedreht wird, wenn der Griff 10 nicht betätigt wird. Die Klammer ist drehfest in einem oder beiden der Elemente 12, 13 der Griffhalterung angeordnet.

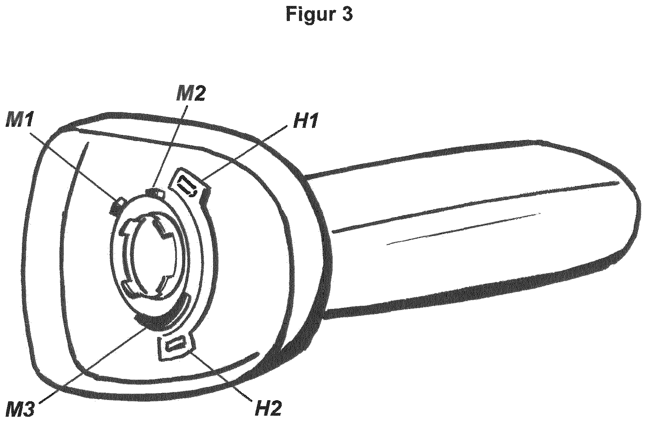

Figur 3 zeigt ein einer weiteren Darstellung die Anordnung der Magnete M1 bis M3 sowie der Hall-Sensoren H1 und H2.

In den im Folgenden beschriebenen Figuren sind die jeweils aktiven, d.h. zusammenwirkenden Sensoren und Magnete jeweils durch einen kreisförmigen Bereich gekennzeichnet.

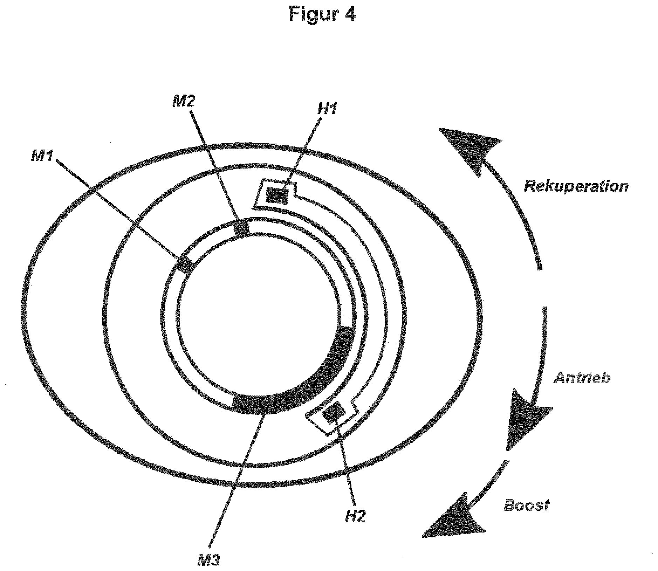

In der Ausgangsstellung des Griffes gemäß Figur 4 betätigt der Magnet M2 den Hall-Sensor H1 und der teilkreisförmige Magnet M3 den Hall-Sensor H2. Die Magnete M1 und M2 sind nicht teilkreisförmig ausgeführt.

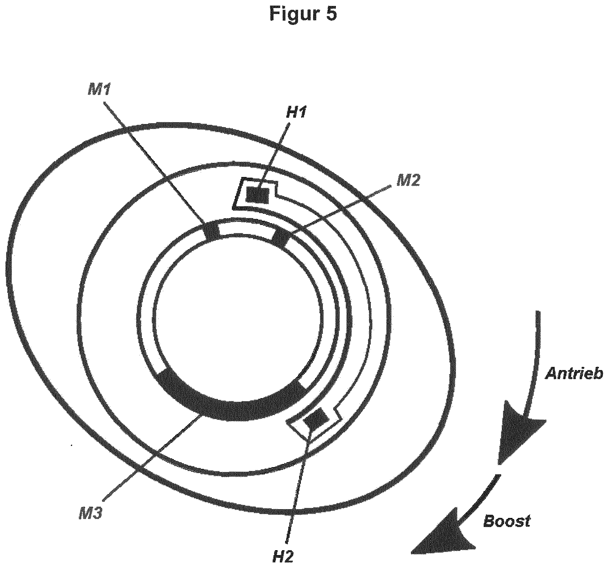

Wird der Griff nun ausgehend von dieser Position in Antriebsrichtung gedreht (vgl. Figur 5), beschleunigt der Roller, da der Elektromotor nun mit Leistung versorgt wird. In diesem Antriebsmodus betätigt der Magnet M3 nach wie vor den Hall-Sensor H2 (vgl. kreisförmiger Bereich), jedoch betätigt der Magnet M2 nicht mehr den Hall-Sensor H1. Das Ausmaß der Drehung wird von dem Sensor H2 erfasst und an die Steuerung weitergegeben, so dass der Roller mit zunehmendem Drehwinkel schneller fährt bzw. eine höhere Leistung des Elektromotors bereitgestellt wird. Diese Funktion liegt über einen Winkelbereich von z.B. 0° bis 45° vor.

Wird der Griff weiter in Pfeilrichtung gedreht, d.h. über den exemplarischen Winkel von 45° hinaus, wird der Boost-Bereich des Antriebsmodus erreicht, in dem der Elektromotor besonders viel Leistung abgibt. Dieser Boost-Modus liegt in einem exemplarischen Winkelbereich von 45° bis 55° vor. In diesem Bereich betätigt der Magnet M1 den Hall-Sensor H1 und der Magnet M3 den Hall-Sensor H2.

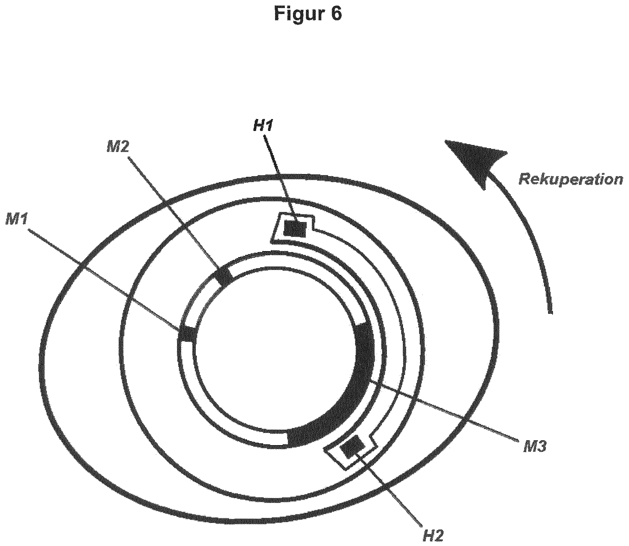

Wird der Griff hingegen aus dem Drehwinkelbereich des Antriebsmodus über die Ausgangstellung hinaus in den zweiten Drehwinkelbereich gemäß Pfeilrichtung in Figur 6 zurückgedreht, wird in dem Ausgangsmodus zunächst wieder die Position gemäß Figur 4 erhalten, d.h. der Magnet M2 betätigt den Hall-Sensor H1 und der teilkreisförmige Magnet M3 den Hall-Sensor H2.

Wird der Griff weiter gedreht, wie in Figur 6 dargestellt, betätigt der Magnet M3 den Hall-Sensor H2, wohingegen, die Magnete M1 und M2 nicht den Hall-Sensor H1 betätigen. Dieser Zustand wird von der Steuerung erkannt und der Elektroroller wird in den Rekuperations-Modus geschaltet, in dem die Bewegungsenergie zur Aufladung des Akkus herangezogen wird und dabei gleichzeitig eine Bremswirkung eintritt.

Es wird ergänzend darauf hingewiesen, dass der Elektroroller gemäß der Erfindung vorzugsweise über weitere Bremseinrichtungen, wie z.B. Trommel- oder Scheibenbremsen verfügt, um bei einer notwendigen starken Verzögerung eine hinreichende Bremskraft bereitzustellen.

## Patentansprüche

1. Elektroroller, mit einer Antriebseinheit, umfassend einen Elektromotor zum Antrieb des Elektrorollers und einen aufladbaren Akku, der mit dem Elektromotor derart in Verbindung steht, dass der Elektromotor von dem Akku gespeist wird, und mit einer Griffanordnung mit einem nutzerseitig zu betätigenden drehbaren Griff (10) sowie mit einer Steuerung, die mit der Griffanordnung sowie mit der Antriebseinheit in Datenverbindung steht und die ausgebildet ist, von der Griffanordnung übermittelte Daten an die Antriebseinheit zu leiten, um die Leistung des Elektromotors in Abhängigkeit von der Drehposition des Griffes (10) zu steuern, wobei der Griff (10) eine Ausgangsstellung aufweist und einen ersten Drehwinkelbereich, in dem sich der Elektroroller in einem Antriebsmodus befindet und ein den Elektromotor antreibendes Signal ausgegeben wird, wobei der erste Drehwinkelbereich durch Drehen des Griffes (10) ausgehend von der Ausgangsstellung in eine erste Drehrichtung erreicht wird, wobei der Griff (10) einen zweiten Drehwinkelbereich aufweist, der durch Drehen des Griffes (10) ausgehend von der Ausgangsstellung in eine zweite, zu der ersten Drehrichtung entgegengesetzte Drehrichtung erreicht wird, wobei die Griffanordnung ausgebildet ist, in dem zweiten Drehwinkelbereich ein Signal auszugeben, dass der Elektroroller in einen Rekuperations-Modus schaltet, **dadurch gekennzeichnet, dass** mindestens drei Positionselemente, und zwar ein erstes Positionselement (M1), ein zweites Positionselement (M2) und ein drittes Positionselement (M3) vorhanden sind, wobei wenigstens das zweite und das dritte Positionselement als Magnete ausgebildet sind, und mindestens zwei Sensoren, und zwar ein erster Sensor (H1) und ein zweiter Sensor (H2) vorhanden sind, wobei wenigstens einer der Sensoren als Hall-Sensor ausgebildet ist, wobei die Positionselemente (M1, M2, M3) und die Sensoren (H1, H2) ausgebildet sind, in Abhängigkeit von der Position der Positionselemente (M1, M2, M3) zu den Sensoren (H1, H2) ein oder mehrere Signale auszugeben, wobei der Griff (10) ausgebildet ist, dass durch eine Drehung des Griffes (10) die Position der Sensoren (H1, H2) relativ zu den Positionselementen (M1, M2, M3) verändert wird, dass sich die Positionselemente (M1, M2, M3) an dem Griff (10) und die Sensoren (H1, H2) an einem nicht mit dem Griff (10) drehbarem Element befinden, und dass das erste Positionselement (M1) und das zweite Positionselement (M2) nicht teilkreisförmig ausgeführt sind und das dritte Positionselement (M3) teilkreisförmig ausgeführt ist, und wobei die Sensoren (H1, H2), das zweite Positionselement (M2) und das dritte Positionselement (M3) so angeordnet sind, dass in der Ausgangsposition des Griffes (10) das dritte Positionselement (M3) den zweiten Sensor (H2) und das zweite Positionselement (M2) den ersten Sensor (H1) betätigt.

2. Elektroroller nach Anspruch 1, **dadurch gekennzeichnet, dass** sich der erste und/oder der zweite Drehwinkelbereich unmittelbar an die Ausgangsstellung anschließen.

3. Elektroroller nach Anspruch 1 oder 2, **dadurch gekennzeichnet, dass** aus Sicht eines neben dem Elektroroller befindlichen Beobachters ausgehend von der Ausgangsstellung der erste Drehwinkelbereich durch Drehen des Griffes (10) gegen den Uhrzeigersinn und der zweite Drehwinkelbereich durch Drehen des Griffes (10) im Uhrzeigersinn erreicht wird.

4. Elektroroller nach einem der vorhergehenden Ansprüche, **dadurch gekennzeichnet, dass** in der Ausgangsstellung weder ein den Elektromotor antreibendes Signal, d.h. weder der Antriebsmodus vorliegt, noch ein den Elektroroller in den Rekuperations-Modus schaltendes Signal ausgegeben wird.

5. Elektroroller nach einem der vorhergehenden Ansprüche, **dadurch gekennzeichnet, dass** die Griffanordnung eine Griffhalterung (12, 13) aufweist, in der der Griff (10) drehbar angeordnet ist.

6. Elektroroller nach Anspruch 1, **dadurch gekennzeichnet, dass** das teilkreisförmige dritte Positionselement (M3) mit dem zweiten Sensor (H2) derart zusammenwirkt, dass der zweite Sensor (H2) ein Signal, vorzugsweise ein Analogsignal, ausgibt, dessen Größe von der Drehposition des dritten Positionselementes (M3) relativ zu dem zweiten Sensor (H2) abhängt.

7. Elektroroller nach Anspruch 1, **dadurch gekennzeichnet, dass** die Sensoren (H1, H2) und die Positionselemente (M1, M2, M3) so angeordnet sind, dass in dem Antriebsmodus das dritte Positionselement (M3) den zweiten Sensor (H2) und kein Positionselement den ersten Sensor (H1) betätigt.

8. Elektroroller nach Anspruch 1 oder 7, **dadurch gekennzeichnet, dass** die Sensoren (H1, H2) und die Positionselemente (M1, M2, M3) so angeordnet sind, dass in einem Boost-Modus das erste Positionselement (M1) den ersten Sensor (H1) und das dritte Positionselement (M3) den zweiten Sensor (H2) betätigt.

9. Elektroroller nach einem der vorhergehenden Ansprüche, **dadurch gekennzeichnet, dass** die Positionselemente (M1, M2, M3) und die Sensoren (H1, H2) derart angeordnet sind, dass in dem Rekuperations-Modus das dritte Positionselement (M3) den zweiten Sensor (H2) und kein Positionselement (M1, M2, M3) den ersten Sensor (H1) betätigt.

10. Elektroroller nach einem der vorhergehenden Ansprüche, **dadurch gekennzeichnet, dass** der erste Drehwinkelbereich größer ist als der zweite Drehwinkelbereich, wobei vorzugsweise vorgesehen ist, dass der erste Drehwinkelbereich in der Spanne von 0° bis 75 °, vorzugsweise in der Spanne von 0° bis 60 ° und besonders bevorzugt in der Spanne von 0° bis 55 ° liegt und/oder dass der zweite Drehwinkelbereich in der Spanne 0° bis -35 °, vorzugsweise 0° bis -30° und besonders bevorzugt in der Spanne von 0° bis - 27° liegt.

## Claims

1. Electric scooter having a drive unit which comprises an electric motor for driving the electric scooter, and a rechargeable battery which is connected to the electric motor in such a way that the electric motor is supplied by the battery, and having a handle arrangement having a rotatable handle (10) that is to be actuated on the user side, and having a controller which is in data connection with the handle arrangement and with the drive unit and which is configured to transfer data, transmitted from the handle arrangement, to the drive unit, in order to control the power of the electric motor depending on the rotational position of the handle (10), wherein the handle (10) has an initial position and a first rotational angle region in which the electric scooter is in a drive mode and a signal driving the electric motor is output, wherein the first rotational angle region is reached by rotating the handle (10) from the initial position in a first direction of rotation, wherein the handle (10) has a second rotational angle region which is reached by rotating the handle (10) proceeding from the initial position in a second direction of rotation opposite to the first direction of rotation, wherein the handle arrangement is configured to output a signal in the second rotational angle region that switches the electric scooter into a recuperation mode, **characterized in that** at least three positioning elements, specifically a first positioning element (M1), a second positioning element (M2) and a third positioning element (M3) are present, wherein at least the second and the third positioning element are configured as magnets, and at least two sensors, specifically a first sensor (H1) and a second sensor (H2), are present, wherein at least one of the sensors is configured as a Hall sensor, wherein the positioning elements (M1, M2, M3) and the sensors (H1, H2) are configured to output one or more signals depending on the position of the positioning elements (M1, M2, M3) relative to the sensors (H1, H2), wherein the handle (10) is configured such that a rotation of the handle (10) changes the position of the sensors (H1, H2) relative to the positioning elements (M1, M2, M3) such that the positioning elements (M1, M2, M3) are located on the handle (10) and the sensors (H1, H2) are located on an element that is not rotatable with the handle (10), and **in that** the first positioning element (M1) and the second positioning element (M2) are not semicircular, and the third positioning element (M3) is semicircular, and wherein the sensors (H1, H2), the second positioning element (M2) and the third positioning element (M3) are arranged such that in an initial position of the handle (10) the third positioning element (M3) actuates the second sensor (H2) and the second positioning element (M2) actuates the first sensor (H1).

2. Electric scooter according to claim 1, **characterized in that** the first and/or the second rotational angle region directly adjoin the initial position.

3. Electric scooter according to claim 1 or 2, **characterized in that** from the view of an observer located beside the electric scooter, proceeding from the initial position the first rotational angle region is reached by rotating the handle (10) anti-clockwise, and the second rotational angle region is reached by rotating the handle (10) clockwise.

4. Electric scooter according to any one of the preceding claims, **characterized in that** in the initial position neither is a signal driving the electric motor, i.e. neither is the drive mode, present, nor is a signal switching the electric scooter into the recuperation mode output.

5. Electric scooter according to any one of the preceding claims, **characterized in that** the handle arrangement comprises a handle bracket (12, 13) in which the handle (10) is rotatably arranged.

6. Electric scooter according to claim 1, **characterized in that** the semicircular third positioning element (M3) interacts with the second sensor (H2) such that the second sensor (H2) outputs a signal, preferably an analogue signal, the magnitude of which depends on the rotational position of the third positioning element (M3) relative to the second sensor (H2).

7. Electric scooter according to claim 1, **characterized in that** the sensors (H1, H2) and the positioning elements (M1, M2, M3) are arranged such that in the drive mode the third positioning element (M3) actuates the second sensor (H2) and no positioning element actuates the first sensor (H1).

8. Electric scooter according to claim 1 or 7, **characterized in that** the sensors (H1, H2) and the positioning elements (M1, M2, M3) are arranged such that in a boost mode the first positioning element (M1) actuates the first sensor (H1) and the third positioning element (M3) actuates the second sensor (H2).

9. Electric scooter according to any one of the preceding claims, **characterized in that** the positioning elements (M1, M2, M3) and the sensors (H1, H2) are arranged such that in the recuperation mode the third positioning element (M3) actuates the second sensor (H2) and no positioning element (M1, M2, M3) actuates the first sensor (H1).

10. Electric scooter according to any one of the preceding claims, **characterized in that** the first rotational angle region is larger than the second rotational angle region, wherein it is preferably provided that the first rotational angle region is in the range of 0° to 75°, preferably in the range of 0° to 60°, and particularly preferably in the range of 0° to 55°, and/or that the second rotational angle region is in the range 0° to -35°, preferably 0° to -30°, and particularly preferably in the range of 0° to -27°.

## Revendications

1. Trottinette électrique avec une unité d'entraînement, comprenant un moteur électrique destiné à entraîner la trottinette électrique et une batterie rechargeable, qui est reliée de telle manière au moteur électrique que le moteur électrique est alimenté par la batterie, et avec un ensemble formant poignée avec une poignée (10) rotative à actionner du côté de l'utilisateur ainsi qu'avec une commande, qui est en liaison de transmission de données avec l'ensemble formant poignée ainsi qu'avec l'unité d'entraînement et qui est réalisée pour acheminer des données transmises par l'ensemble formant poignée à l'unité d'entraînement pour commander la puissance du moteur électrique en fonction de la position de rotation de la poignée (10), dans laquelle la poignée (10) présente une position de départ et une première plage d'angles de rotation, dans laquelle la trottinette électrique se trouve dans un mode d'entraînement, et un signal entraînant le moteur électrique est émis, dans laquelle la première plage d'angles de rotation est atteinte par la rotation de la poignée (10) en partant de la position de départ dans une première direction de rotation, dans laquelle la poignée (10) présente une deuxième plage d'angles de rotation, qui est atteinte par la rotation de la poignée (10) en partant de la position de départ dans une deuxième direction de rotation opposée à la première direction de rotation, dans laquelle l'ensemble formant poignée est réalisé pour émettre dans la deuxième plage d'angles de rotation un signal, qui commute la trottinette électrique dans un mode de récupération, **caractérisée en ce qu'**au moins trois éléments de position, à savoir un premier élément de position (M1), un deuxième élément de position (M2) et un troisième élément de position (M3), sont présents, dans laquelle au moins le deuxième et le troisième élément de position sont réalisés en tant qu'aimants, et au moins deux capteurs, à savoir un premier capteur (H1) et un deuxième capteur (H2), sont présents, dans laquelle au moins un des capteurs est réalisé en tant que capteur à effet hall, dans laquelle les éléments de position (M1, M2, M3) et les capteurs (H1, H2) sont réalisés pour émettre un ou plusieurs signaux en fonction de la position des éléments de position (M1, M2, M3) par rapport aux capteurs (H1, H2), dans laquelle la poignée (10) est réalisée de telle sorte qu'une rotation de la poignée (10) permet de modifier la position des capteurs (H1, H2) par rapport aux éléments de position (M1, M2, M3), que les éléments de position (M1, M2, M3) se trouvent sur la poignée (10) et les capteurs (H1, H2) se trouvent sur un élément ne pouvant pas tourner avec la poignée (10), et que le premier élément de position (M1) et le deuxième élément de position (M2) ne sont pas réalisés avec une forme partiellement circulaire et le troisième élément de position (M3) est réalisé avec une forme partiellement circulaire, et dans laquelle les capteurs (H1, H2), le deuxième élément de position (M2) et le troisième élément de position (M3) sont disposés de telle sorte que dans la position de départ de la poignée (10), le troisième élément de position (M3) actionne le deuxième capteur (H2) et le deuxième élément de position (M2) actionne le premier capteur (H1).

2. Trottinette électrique selon la revendication 1, **caractérisée en ce que** la première et/ou la deuxième plage d'angles de rotation se raccordent directement à la position de départ.

3. Trottinette électrique selon la revendication 1 ou 2, **caractérisée en ce que** depuis la perspective d'un observateur se trouvant à côté de la trottinette électrique en partant de la position de départ, la première plage d'angles de rotation est atteinte par la rotation de la poignée (10) dans le sens contraire des aiguilles d'une montre et la deuxième plage d'angles de rotation est atteinte par la rotation de la poignée (10) dans le sens des aiguilles d'une montre.

4. Trottinette électrique selon l'une quelconque des revendications précédentes, **caractérisée en ce que** dans la position de départ, ni un signal entraînant le moteur électrique, en d'autres termes le mode d'entraînement, n'est disponible, ni un signal commutant la trottinette électrique dans le mode de récupération n'est émis.

5. Trottinette électrique selon l'une quelconque des revendications précédentes, **caractérisée en ce que** l'ensemble formant poignée présente une fixation de poignée (12, 13), dans laquelle la poignée (10) est disposée de manière à pouvoir tourner.

6. Trottinette électrique selon la revendication 1, **caractérisée en ce que** le troisième élément de position (M3) de forme partiellement circulaire coopère avec le deuxième capteur (H2) de telle manière que le deuxième capteur (H2) émet un signal, de préférence un signal analogique, dont la grandeur dépend de la position de rotation du troisième élément de position (M3) par rapport au deuxième capteur (H2).

7. Trottinette électrique selon la revendication 1, **caractérisée en ce que** les capteurs (H1, H2) et les éléments de position (M1, M2, M3) sont disposés de telle sorte que dans le mode d'entraînement, le troisième élément de position (M3) actionne le deuxième capteur (H2) et aucun élément de position n'actionne le premier capteur (H1).

8. Trottinette électrique selon la revendication 1 ou 7, **caractérisée en ce que** les capteurs (H1, H2) et les éléments de position (M1, M2, M3) sont disposés de telle sorte que dans un mode propulsion, le premier élément de position (M1) actionne le premier capteur (H1) et le troisième élément de position (M3) actionne le deuxième capteur (H2).

9. Trottinette électrique selon l'une quelconque des revendications précédentes, **caractérisée en ce que** les éléments de position (M1, M2, M3) et les capteurs (H1, H2) sont disposés de telle manière que dans le mode de récupération, le troisième élément de position (M3) actionne le deuxième capteur (H2) et aucun élément de position (M1, M2, M3) n'actionne le premier capteur (H1).

10. Trottinette électrique selon l'une quelconque des revendications précédentes, **caractérisée en ce que** la première plage d'angles de rotation est plus grande que la deuxième plage d'angles de rotation, dans laquelle il est prévu de préférence que la première plage d'angles de rotation se situe dans la fourchette de 0° à 75°, de préférence dans la fourchette de 0° à 60° et manière particulièrement préférée dans la fourchette de 0° à 55° et/ou que la deuxième plage d'angles de rotation se situe dans la fourchette de 0° à -35°, de préférence de 0° à -30°, et de manière particulièrement préférée dans la fourchette de 0° à -27°.
